# EUROPEAN PATENT APPLICATION

(11) **EP 4 779 752 A2**
(43) Date of publication of application: **22.07.2026**
(21) Application number: 26178842.6
(22) Date of filing: 15.05.2026
(51) Int. Cl.: H01M 10/42, H01M 50/105, H01M 50/287

(54) **BATTERY**

(30) Priority: 27.06.2025 CN 202510886313
(71) Applicant: Zhuhai Cosmx Power Co., Ltd., Zhuhai, Guangdong 519180 (CN)
(72) Inventor: WANG, Dewei, Guangdong, 519180 (CN); ZONG, Yanzhen, Guangdong, 519180 (CN)
(74) Representative: Vossius & Partner Patentanwälte Rechtsanwälte mbB

(57) **Abstract**

The present invention discloses a battery including a battery cell, a protection board, and a potting member, where the battery cell includes an electrode assembly and a film casing, and the battery cell has a top end surface and side end surfaces. The film casing is provided with a first groove and a second groove. The film casing is provided with a top sealing edge including a first straight portion and a first bent portion. The protection board is connected to a top end of the battery cell along a height direction, and the protection board includes a protection board body and a connecting terminal. The potting member covers an outer peripheral portion of the protection board and exposes at least a portion of a side surface of the protection board body on the same side as the shallow recessed surface.

## Description

### TECHNICAL FIELD

The present invention relates to the technical field of battery structures, and more particularly, to a battery.

### BACKGROUND

Reducing the space occupied by a battery protection board in a battery has become a development trend. For example, in the related art, the battery protection board is arranged vertically to increase battery capacity.

In addition, in the related art, components of the battery protection board are exposed. For such a structure, when the battery protection board is arranged vertically, the components are susceptible to an impact damage, resulting in low structural reliability. To enhance the structural reliability of the battery protection board, a head potting process is employed, where a head potting structure is used to protect the components of the battery protection board such that the components are located in the head potting structure, preventing the components from being damaged by impact. In this technology, to ensure that a potting member protects the components and/or side surfaces of the protection board, an adhesive with a thickness of at least 0.4 mm generally needs to cover the side surfaces of the protection board.

However, for the battery protection board with such a structure, when applied to a relatively thin battery cell, if the conventional solution of fully wrapping around the protection board is still used, a thickness of the potting member may exceed a thickness of the battery cell, resulting in an increased overall battery thickness and affecting the energy density of the battery.

Therefore, in the case of a relatively thin battery cell, ensuring the safety of the protection board while maintaining the energy density of the battery remains an urgent problem to be addressed by a person skilled in the art.

### SUMMARY

In view of above, an object of the present invention is to provide a battery for solving the above technical problems.

To achieve the above object, the present invention provides the following technical solution.

A battery includes:
a battery cell including an electrode assembly and a film casing, the battery cell including a top end surface at one end of the battery cell along a height direction and side end surfaces at two ends of the battery cell along a width direction, where the film casing is provided with a first groove and a second groove, the first groove and the second groove enclosing a space for accommodating the electrode assembly, a depth of the first groove along a thickness direction of the battery cell being greater than a depth of the second groove along the thickness direction, an outer wall surface of the first groove perpendicular to the thickness direction being a deep recessed surface, an outer wall surface of the second groove perpendicular to the thickness direction being a shallow recessed surface; the film casing is provided with a top sealing edge along the height direction, the top sealing edge including a first straight portion and a first bent portion, the first straight portion being connected to the top end surface by the first bent portion, and the first bent portion being bent toward a side where the deep recessed surface is located; and the film casing is provided with side sealing edges on two sides along the width direction, each side sealing edge including a second straight portion and a second bent portion, the second straight portion being connected to the side end surface by the second bent portion, and the second straight portion being attached to the side end surface;
a protection board connected to a top end of the battery cell along the height direction, the protection board including a protection board body and a connecting terminal; and
a potting member covering an outer peripheral portion of the protection board and exposing at least a portion of a side surface of the protection board body on the same side as the shallow recessed surface,
where a dimension of the battery cell along the thickness direction is defined as A, and a dimension of the protection board body along the thickness direction is defined as B; and along the thickness direction, a minimum dimension of the potting member from the side surface of the protection board body to a surface of the potting member on a non-exposed side is defined as C, and a dimension of the potting member along the thickness direction is defined as D,
where C ≥ 0.4 mm, 0.4 mm < A - B < 0.8 mm, and D ≤ A.

Optionally, the battery further includes:
a first insulation layer covering at least a portion of the exposed portion of the protection board body.

Optionally, the first insulation layer includes:
a first covering portion covering at least the portion of the protection board body exposed outside the potting member;
a second covering portion covering a side of the potting member away from the exposed side of the protection board body; and
a third covering portion connected between the first covering portion and the second covering portion and attached to a top end of the potting member along the height direction.

Optionally, a stepped structure is provided at a top of the potting member along the height direction, the stepped structure including a first step surface, a second step surface, and a connecting surface connecting the first step surface and the second step surface, and the first step surface and the second step surface being distributed along the width direction.

The first insulation layer is provided with a first gap at a position corresponding to the connecting surface, the first gap extending at least from a junction between the second covering portion and the third covering portion toward the first covering portion to an edge of the first insulation layer.

Optionally, the first gap has a dimension ranging from 0.4 to 2 mm along the width direction.

Optionally, along the height direction, a height of the second step surface relative to the top end surface of the battery cell is E, and a height of the first step surface relative to the top end surface of the battery cell is H, where E > H. The protection board includes a flexible circuit board disposed on the first step surface, a thickness of the flexible circuit board along the height direction is K, where E - H > K.

Optionally, along the thickness direction, projections of the first gap, a tab of the battery cell, and a conductive sheet of the protection board overlap; or
the first insulation layer is provided with a second gap at positions corresponding to the tab, the conductive sheet, and/or a preset device of the protection board, and the tab, the conductive sheet, and the preset device are all located inside the potting member.

Optionally, the battery cell is provided with a tab, and the protection board body includes a conductive sheet for connection to the tab;
the tab and the conductive sheet are both enclosed inside the potting member; and/or
the tab includes a third straight portion and a third bent portion, the third straight portion being connected to the top sealing edge of the battery cell by the third bent portion, the third straight portion being connected to the conductive sheet, the third bent portion being positioned away from the exposed side of the protection board body, and along the thickness direction, a distance from an outer side surface of the third bent portion to an outer surface of the potting member being greater than 0.4 mm.

Optionally, the battery further includes a second insulation layer covering an end portion of the side sealing edge along the height direction and an overflow portion of the potting member corresponding to the side sealing edge.

Preferably, the second insulation layer and the first insulation layer are formed as an integral structure.

Optionally, the battery further includes:
a tear-off label disposed on an outer surface of the battery, where along the height direction, a spacing is formed between the tear-off label and an edge of the first insulation layer, and the tear-off label covers at least a portion of the second insulation layer; and/or
along the height direction, a spacing is formed between the edge of the first insulation layer and a top end surface of the battery cell.

The battery according to the present invention has the following advantageous effects.

According to the battery of the present invention, the film casing includes a first groove and a second groove, a bent top sealing edge, a bent side sealing edge, and a top sealing edge bent toward the side where the deep recessed surface is located. For a battery with such a structural configuration, the present invention enables the potting member not to fully cover the outer peripheral portion of the protection board body; instead, at least a portion of the side surface of the protection board body on the same side as the shallow recessed surface is exposed outside the potting member. As such, by exposing the protection board body, the heat dissipation performance is enhanced, which is beneficial for dissipating heat from the protection board. Moreover, this configuration can reduce the overall thickness of the potting member along the thickness direction of the battery cell, preventing the potting member from being thicker than the battery cell. As a result, the energy density of the battery is increased, facilitating a thinner design of the battery. Alternatively, the width of the protection board along the thickness direction of the battery cell can be increased, thereby enhancing a charge rate and a discharge rate of the entire battery. In addition, the side of the protection board body exposed outside the potting member is on the same side as the shallow recessed surface. When the battery is mounted, the shallow recessed surface of the battery cell assembly typically faces a battery compartment of an electric apparatus. Therefore, by exposing the portion of the protection board body corresponding to the side of the shallow recessed surface of the battery cell assembly, the exposed portion of the protection board body faces the battery compartment. This arrangement can prevent the exposed portion of the protection board body from facing away from the battery compartment, which could otherwise easily cause a short circuit with the circuit board or metallic components of the electric apparatus.

### BRIEF DESCRIPTION OF THE DRAWINGS

To more clearly illustrate technical solutions in embodiments of the present invention or in the related art, the drawings used in the descriptions of the embodiments or the related art are briefly introduced below. It is apparent that the drawings described below are merely embodiments of the present invention, and a person of ordinary skill in the art may still derive other drawings from the provided drawings without creative efforts.
FIG. 1 is an exploded view of a battery according to a specific embodiment of the present invention.
FIG. 2 is a schematic structural diagram of a battery before potting.
FIG. 3 is a schematic structural diagram of an exposed side of a protection board (shallow recessed surface side) of a battery after potting.
FIG. 4 is a schematic structural diagram of another side (deep recessed surface side) of a battery after potting.
FIG. 5 is a schematic structural diagram of a side surface of a battery after potting.
FIG. 6 is a schematic diagram of a dimensional relationship between a thickness of a battery cell and a width of a protection board along a thickness direction of the battery cell.
FIG. 7 is a schematic structural diagram of a first insulation layer covering an exposed side of a protection board.
FIG. 8 is a schematic structural diagram of another side of a battery shown in FIG. 7.
FIG. 9 is a schematic structural diagram of a side surface of a battery shown in FIG. 7.
FIG. 10 is a schematic plan view of a stepped structure of a potting member.
FIG. 11 is a schematic structural diagram of a stepped structure of a potting member.
FIG. 12 is a schematic structural diagram of a flexible circuit board of a protection board disposed on a first step surface.
FIG. 13 is a schematic plan view of a first insulation layer in an unfolded state.
FIG. 14 is a schematic structural diagram of a first covering portion of a first insulation layer covering an exposed side of a protection board.
FIG. 15 is a schematic structural diagram of a third covering portion of a first insulation layer covering a top end of a potting member along a thickness direction of a battery cell.
FIG. 16 is a schematic structural diagram of a second covering portion of a first insulation layer covering a side of a potting member away from an exposed side of a protection board.
FIG. 17 is a schematic structural diagram of alignment of a first gap of a first insulation layer with a connecting surface before the first insulation layer wraps around a potting member.
FIG. 18 is a schematic structural diagram of a second covering portion of a first insulation layer adhered to one side of a potting member.
FIG. 19 is a cross-sectional view of a relative position of a tab of a battery cell and a potting member.
FIG. 20 is a schematic structural diagram of a projection along a thickness direction of a battery cell, where a first gap, a tab of the battery cell, and a conductive sheet of a protection board overlap.
FIG. 21 is a schematic structural diagram showing that a second insulation layer covers an end portion of a side sealing edge of a battery cell and an overflow portion of a potting member corresponding to a side sealing edge.
FIG. 22 is an enlarged partial schematic view of part I in FIG. 21.
FIG. 23 is a schematic structural diagram showing that a second insulation layer does not cover an end portion of a side sealing edge of a battery cell and an overflow portion of a potting member corresponding to a side sealing edge.
FIG. 24 is a schematic structural diagram showing that a tear-off label is spaced apart from a first insulation layer on a shallow recessed surface of a battery along a height direction.
FIG. 25 is a schematic structural diagram showing that a tear-off label on a deep recessed surface of a battery at least partially covers a second insulation layer.
FIG. 26 is a schematic structural diagram of a side surface of a battery shown in FIG. 24.
FIG. 27 is a schematic diagram of a relative position between an edge of a first insulation layer on a shallow recessed surface of a battery cell and an end surface of the battery cell.
FIG. 28 is a schematic diagram of a relative position between an edge of a first insulation layer on a deep recessed surface of a battery cell and an end surface of the battery cell.
FIG. 29 is a schematic structural diagram of a first insulation layer covering a top end of a battery cell.

Reference signs:
1. Battery cell; 11. Tab; 12. Side sealing edge; 13. Shallow recessed surface; 14. Deep recessed surface; 2. Protection board; 21. Flexible circuit board; 22. Conductive sheet; 3. Potting member; 31. First step surface; 32. Second step surface; 33. Connecting surface; 34. Overflow portion; 4. First insulation layer; 41. First covering portion; 42. Third covering portion; 43. Second covering portion; 44. First gap; 45. Second insulation layer; 5. Tear-off label; 6. Double-sided adhesive tape; 7. Adhesive; 8. Tail insulation layer.

### DESCRIPTION OF EMBODIMENTS

Technical solutions in embodiments of the present invention are clearly and completely described below with reference to the drawings in the embodiments of the present invention. It is apparent that the embodiments described are merely part rather than all of the embodiments of the present invention. Based on the embodiments of the present invention, all other embodiments obtained by a person of ordinary skill in the art without involving creative effort fall within the scope of protection of the present invention.

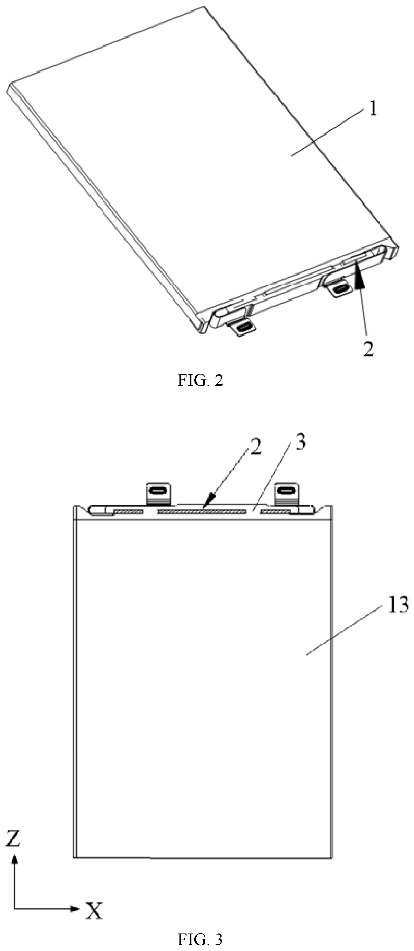

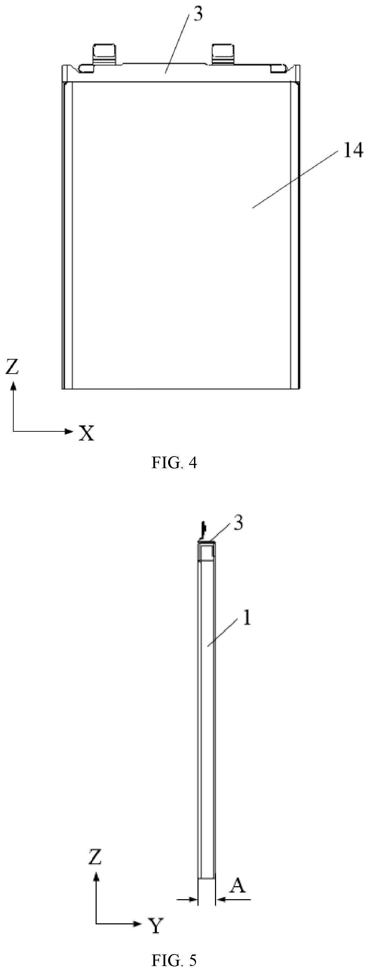

It is to be noted that, for ease of understanding, in the embodiments of the present invention, a height direction of a battery cell refers to a Z-axis direction in FIGS. 3 to 5, a width direction of the battery cell refers to an X-axis direction in FIGS. 3 to 5, and a thickness direction of the battery cell refers to a Y-axis direction in FIGS. 3 to 5. It may be understood that the height direction, the width direction, and the thickness direction of the battery cell correspond to the height direction, the width direction, and the thickness direction of the battery, respectively. The directions referred to in the following embodiments can be understood with reference to the X-axis direction, the Y-axis direction, and the Z-axis direction in FIGS. 3 to 5.

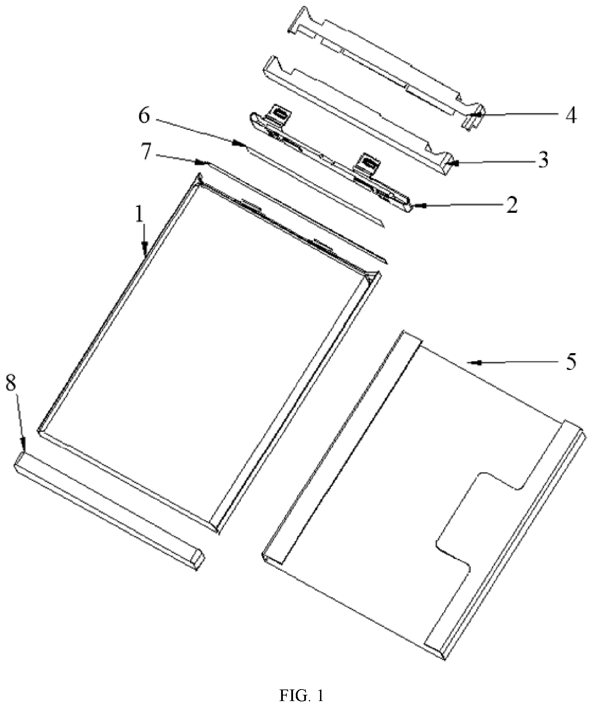

Referring to FIGS. 1 to 6, the embodiments of the present invention provide a battery including a battery cell 1, a protection board 2, and a potting member 3, where the battery cell 1 includes an electrode assembly and a film casing, and the battery cell includes a top end surface at one end of the battery cell along a height direction and side end surfaces at two ends of the battery cell along a width direction. The film casing is provided with a first groove and a second groove, where the first groove and the second groove enclose a space for accommodating the electrode assembly, a depth of the first groove along a thickness direction of the battery cell is greater than a depth of the second groove along the thickness direction of the battery cell, an outer wall surface of the first groove perpendicular to the thickness direction of the battery cell is a deep recessed surface 14, and an outer wall surface of the second groove perpendicular to the thickness direction of the battery cell is a shallow recessed surface 13; and the film casing is provided with a top sealing edge along the height direction of the battery cell, the top sealing edge includes a first straight portion and a first bent portion, the first straight portion is connected to the top end surface of the battery cell by the first bent portion, and the first bent portion is bent toward a side where the deep recessed surface 14 is located. The film casing is provided with side sealing edges on two sides of the battery cell along the width direction, each side sealing edge including a second straight portion and a second bent portion, the second straight portion being connected to the side end surface of the battery cell by the second bent portion, and the second straight portion being attached to the side end surface. The protection board 2 is connected to a top end of the battery cell 1 along the height direction. The protection board 2 includes a protection board body and a connecting terminal. The potting member 3 covers an outer peripheral portion of the protection board 2 and exposes at least a portion of a side surface of the protection board body on the same side as the shallow recessed surface 13. A dimension of the battery cell 1 along the thickness direction is defined as A, and a dimension of the protection board body along the thickness direction of the battery cell is defined as B. Along the thickness direction of the battery cell, a minimum dimension of the potting member 3 from the side surface of the protection board body to a surface of the potting member on a non-exposed side is defined as C, and a dimension of the potting member along the thickness direction is defined as D, where C ≥ 0.44 mm, 0.44 mm < A - B < 0.8 mm, and D ≤ A.

That is, according to the battery in the embodiments of the present invention, the film casing includes a first groove and a second groove, a bent top sealing edge, a bent side sealing edge, and a top sealing edge bent toward the side where the deep recessed surface 14 is located. For a battery with such a structural configuration, the embodiments of the present invention enable the potting member 3 not to fully cover the outer peripheral portion of the protection board body; instead, at least a portion of the side surface of the protection board body on the same side as the shallow recessed surface 13 is exposed outside the potting member 3. As such, by exposing the protection board body, the heat dissipation performance is enhanced, which is beneficial for dissipating heat from the protection board 2. Moreover, this configuration can reduce the overall thickness of the potting member 3 along the thickness direction of the battery cell, thus preventing the potting member from being thicker than the battery cell. As a result, the energy density of the battery is increased, facilitating a thinner design of the battery. Alternatively, the width of the protection board 2 along the thickness direction of the battery cell can be increased, thereby enhancing a charge rate and a discharge rate of the entire battery. In addition, the side of the protection board body exposed outside the potting member 3 is on the same side as the shallow recessed surface 13. When the battery is mounted, the shallow recessed surface 13 of the battery cell 1 typically faces a battery compartment of an electric apparatus. Therefore, by exposing the portion of the protection board body corresponding to the side of the shallow recessed surface 13 of the battery cell 1, the exposed portion of the protection board body faces the battery compartment. This arrangement can prevent the exposed portion of the protection board body from facing away from the battery compartment, which could otherwise easily cause a short circuit with a circuit board or metallic components of the electric apparatus.

The protection board body may include a PCB, components mounted on the PCB, and nickel strips connected to the PCB. In some embodiments, the PCB may be replaced with a hybrid board including an FPC and a PCB. The connecting terminal refers to a device that connects the protection board body to an electric apparatus and is typically an FPC or a wire.

In a c-f-pack battery cell, the c-f-pack technology means that the top sealing edge of the battery cell is bent and adhered to the top end surface of the battery cell, the protection board body is placed on the surface of the top sealing edge away from the battery cell body, and the width direction of the protection board body is aligned with the thickness direction of the battery cell. Moreover, a potting member is formed around the outer peripheral portion of the protection board body by means of low-pressure injection molding. In an example, if the thickness of the battery cell exceeds the width of the protection board body by only 0.4 to 0.8 mm, i.e., 0.4 mm < A - B < 0.8 mm, and the protection board is still fully wrapped on two sides with potting members having a thickness greater than 0.4 mm, the thickness of the potting members may exceed the thickness of the battery cell. In this case, although the battery cell is relatively thin, the overall thickness of the battery is affected by the thickness of the potting members, resulting in a reduced energy density of the battery. In the present application, on the same side of the potting member as the shallow recessed surface of the battery cell, at least a portion of the protection board body is exposed, making the potting member relatively thin at this location. Consequently, D ≤ A is achieved, ensuring both the short-circuit safety and the energy density of the battery.

In an example, the value of C may be 0.5 mm, 0.6 mm, 0.7 mm, or the like. The dimension A - B may be 0.5 mm, 0.6 mm, 0.7 mm, or the like.

It is to be noted that, in some embodiments, the outer surface of the exposed portion of the protection board body is flush with the outer surface of the potting member 3 on the exposed side of the protection board body. That is, the protection board body does not project from the outer surface of the potting member 3, ensuring that the protection board body is exposed only on the same side as the shallow recessed surface 13, with no exposed portion of the protection board body along the thickness direction of the battery cell. This arrangement allows the potting member 3 to fully wrap around the components (such as a connecting terminal) of the protection board 2, thereby enhancing the effectiveness and reliability of the potting member 3 in wrapping the components of the protection board 2 and helping to prevent the components of the protection board 2 from the impact damage.

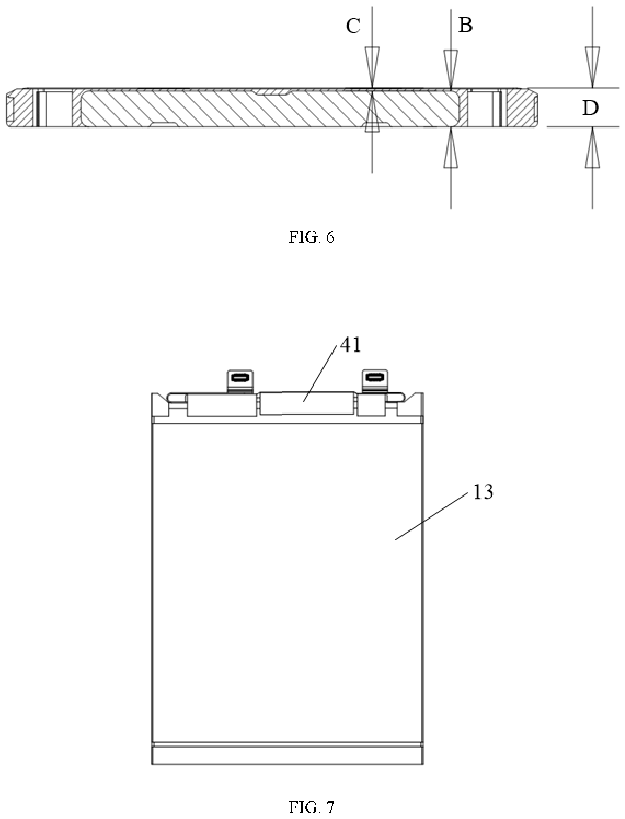

Further, referring to FIGS. 3 and 7, in some embodiments, the battery further includes a first insulation layer 4 covering at least a portion of the exposed portion of the protection board body.

That is, in this embodiment, based on at least partial exposure of the side surface of the protection board body on the same side as the shallow recessed surface 13, a first insulation layer 4 is additionally provided to cover at least a portion of the part of the protection board body exposed outside the potting member 3. This prevents the exposed area of the protection board body from being excessively large, which could otherwise cause an insulation problem. In other words, the first insulation layer 4 serves to insulate the portion of the protection board body that is exposed outside. In addition, the first insulation layer 4 can also mitigate the risk of the exposed portion of the protection board body being scratched or coming into contact with an electric apparatus, which could otherwise cause a short circuit. In addition, when the first insulation layer 4 covers only a portion of the exposed portion of the protection board body, the remaining portion of the protection board body that is exposed outside the potting member 3 and not covered by the first insulation layer 4 is in contact with air, which is conducive to enhancing the heat dissipation performance of the protection board 2.

That is, in this embodiment, the combined effect of the potting member 3 and the first insulation layer 4 ensures the overall insulation of the protection board 2, avoiding an insulation failure due to an exposed portion of the protection board 2, and mitigating the risk of damage to the components of the protection board 2.

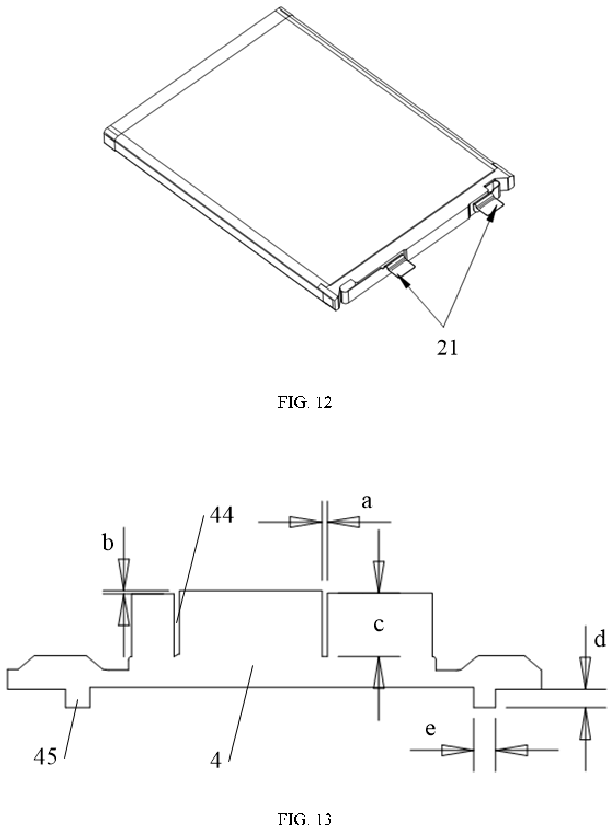

It is to be noted that the first insulation layer 4 may entirely cover the exposed portion of the protection board 2, so that the protection board 2 is completely enclosed in the potting member 3 and the first insulation layer 4. In this case, no part of the protection board 2 is exposed outside, thereby fully ensuring the insulation of the protection board 2. In addition, the first insulation layer 4 may cover only a portion of the exposed portion of the protection board body. This arrangement is intended to prevent the area of the protection board body exposed outside the potting member 3 from being excessively large. By providing the first insulation layer 4, the exposed area of the protection board body is reduced, which is conducive to lowering the risk of insulation failure of the protection board 2. For example, as described below, due to the presence of a first gap 44 (see FIG. 12), if the portion of the protection board 2 exposed outside the potting member 3 corresponds to the first gap 44, there may still be a portion of the protection board 2 exposed at the first gap 44 even after the insulation layer 4 is provided. In this case, the first gap 44 can increase the contact area between the protection board 2 and the air, which is beneficial for heat dissipation.

It is to be noted that the specific structure of the first insulation layer 4 is not limited in this embodiment. For structural simplicity, the first insulation layer 4 may be formed of an insulating adhesive tape; that is, by applying the insulating adhesive tape, at least a portion of the protection board body exposed outside the potting member 3 is covered.

In addition, the specific structure of the first insulation layer 4 is not limited in this embodiment, provided that the first insulation layer 4 covers at least a portion of the exposed portion of the protection board body.

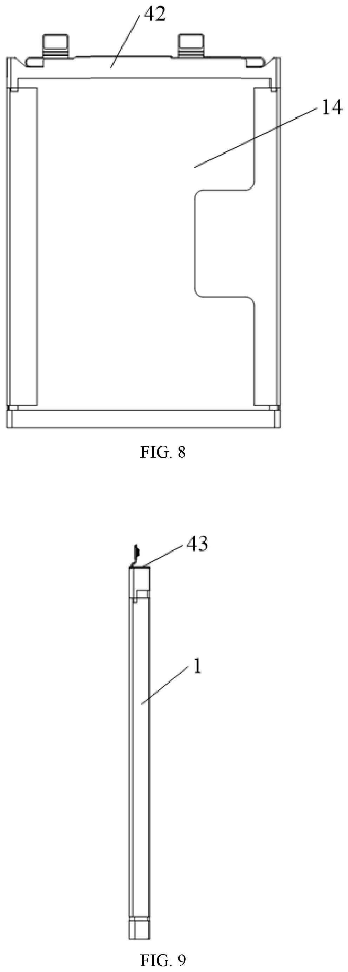

Referring to FIGS. 7, 8 and 9, in some embodiments, the first insulation layer 4 includes a first covering portion 41, a second covering portion 42, and a third covering portion 43, where the first covering portion 41 covers at least a portion of the protection board body exposed outside the potting member 3. The second covering portion 42 covers a side of the potting member 3 away from the exposed side of the protection board body. The third covering portion 43 is connected between the first covering portion 41 and the second covering portion 42 and attached to a top end of the potting member 3 along the height direction of the battery cell.

That is, in this embodiment, the first insulation layer 4 wraps from the side of the protection board 2 that is exposed to the side of the protection board 2 away from the exposed side. For the portion of the protection board 2 not exposed outside the potting member 3, the first insulation layer 4 wraps around the outer peripheral portion of the potting member 3, thereby increasing the area of the first insulation layer 4 and enhancing the reliability of the arrangement of the first insulation layer 4.

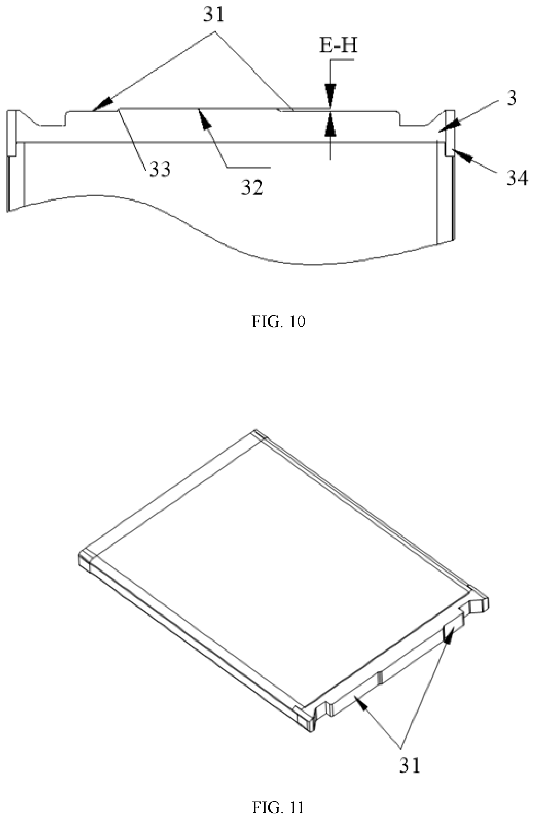

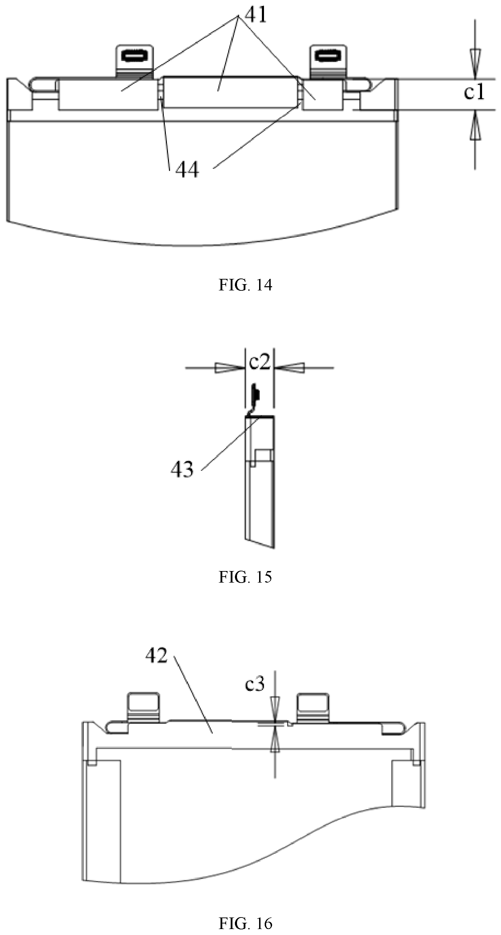

Further, referring to FIGS. 10 to 16, in some embodiments, a stepped structure is provided at a top of the potting member 3 along the height direction of the battery cell, the stepped structure including a first step surface 31, a second step surface 32, and a connecting surface 33 connecting the first step surface 31 and the second step surface 32, and the first step surface 31 and the second step surface 32 being distributed along the width direction of the battery cell. The first insulation layer 4 is provided with a first gap 44 at a position corresponding to the connecting surface 33, the first gap 44 extending at least from a junction between the second covering portion 42 and the third covering portion 43 toward the first covering portion 41 to an edge of the first insulation layer 4.

It can be understood that for a vertically oriented protection board 2, a flexible circuit board 21 of the protection board 2 (see FIG. 12) also needs to be arranged vertically. To facilitate battery assembly, the flexible circuit board 21 requires some movement space. To ensure the movement space of the flexible circuit board 21, in this embodiment, a stepped structure is provided at the top of the potting member 3 along the height direction of the battery cell, forming a first step surface 31 and a second step surface 32 with a height difference along the height direction of the battery cell. The height difference between the first step surface 31 and the second step surface 32 along the height direction of the battery cell provides the movement space for the flexible circuit board 21, thereby facilitating battery assembly.

To ensure the movement space for the flexible circuit board 21, in some embodiments, a height of the second step surface 32 relative to the top end surface of the battery cell is E, and a height of the first step surface 31 relative to the top end surface of the battery cell is H, where E > H. The protection board 2 includes the flexible circuit board 21, the flexible circuit board 21 is provided with the first step surface 31, and a thickness of the flexible circuit board 21 along the height direction of the battery cell is K, where E - H > K.

That is, along the height direction of the battery cell, the height of the first step surface 31 is less than the height of the second stage surface 32, such that the second step surface 32 forms a boss structure while the first step surface 31, adjacent to the second step surface 32, forms a groove structure. The flexible circuit board 21 is disposed on the first step surface 31, and the height difference (E - H) between the second step surface 32 and the first step surface 31 is greater than the thickness K of the flexible circuit board 21, thereby providing the flexible circuit board 21 with a movement space on the first step surface 31 and facilitating self-adaptive positioning of the flexible circuit board 21 during battery assembly.

It is to be noted that the specific value of the height difference E - H between the second step surface 32 and the first step surface 31 is not limited in this embodiment, provided that it can meet the movement requirements of the flexible circuit board 21 during battery assembly. For example, the height difference E - H may range from K + 0.1 mm to K + 0.3 mm.

In addition, to facilitate the connection between the first step surface 31 and the second step surface 32, the connecting surface 33 between the first step surface 31 and the second step surface 32 is formed as an inclined surface, such that the first step surface 31 and the second step surface 32 are connected via the inclined surface so as to form a transitional connection therebetween.

In addition, the number of first step surfaces 31 is not limited in this embodiment. The number of first step surfaces 31 may be one or two. In an example, the number of first step surfaces 31 is two, with the two first step surfaces 31 disposed on two sides of the second step surface 32 along the width direction of the battery cell, respectively, such that the second step surface 32 and the two first step surfaces 31 together form a structure with a higher middle portion and lower side portions, thereby creating two grooves on two sides of the second step surface 32 for disposing the flexible circuit board 21.

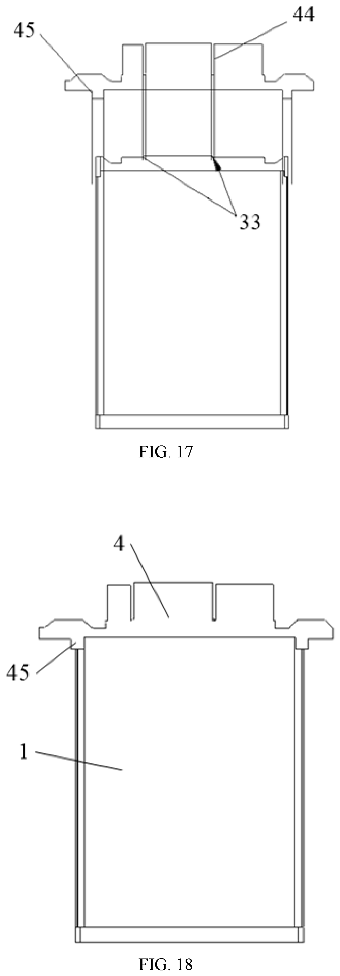

More importantly, the first insulation layer 4 is provided with a first gap 44 at a position corresponding to the connecting surface 33 between the first step surface 31 and the second step surface 32. The first gap 44 extends at least from the junction between the second covering portion 42 and the third covering portion 43 toward the first covering portion 41 to the edge of the first insulation layer 4. Thus, during mounting of the first insulation layer 4 (referring to FIGS. 17 and 18), the first gap 44 is aligned with the connecting surface 33 between the first step surface 31 and the second step surface 32, and the first insulation layer 4 is attached over the outside of the potting member 3. When the first insulation layer 4 wraps the exposed portion of the protection board 2 and the potting member 3 (for portions of the protection board 2 not exposed outside the potting member 3, the first insulation layer 4 wraps around the outer surface of the potting member 3), and the first insulation layer 4 covers the top of the potting member 3 along the height direction of the battery cell, the presence of the first gap 44 prevents the first insulation layer 4 from forming wrinkles at the stepped structure on the top of the potting member 3. This enables the first insulation layer 4 to closely attach to and wrap around the various wall surfaces of the potting member 3, such as the first step surface 31 and the second step surface 32, avoiding wrinkling caused by the stepped structure during attachment of the first insulation layer 4 to the potting member 3.

It is to be noted that the specific dimensions of the first gap 44 are not limited in this embodiment, provided that the presence of the first gap 44 allows the first insulation layer 4 to attach well to the exterior of the potting member 3 without forming wrinkles. In addition, it can be understood that the first gap 44 mentioned above may cause exposure of the protection board body. Therefore, the width of the first gap 44 should not be excessively large, as this may result in excessive exposure of the protection board body at the first gap 44, which is detrimental to maintaining the insulation of the protection board 2.

In some embodiments, the first gap 44 has a dimension a ranging from 0.4 to 2 mm along the width direction of the battery cell.

That is, in this embodiment, the width of the first gap 44 is a, where a ranges from 0.4 to 2 mm. Within this range, the first insulation layer 4 can achieve good attachment to the potting member 3 without forming wrinkles, while ensuring that the insulation and protective function are effectively maintained. It can be understood that if the width of the first gap 44 is too small, the wrapping performance of the first insulation layer 4 may be affected, easily leading to defects such as wrinkling at the stepped structure. If the width of the first gap 44 is too large, there is a risk of excessive exposure of the protection board 2, which would compromise the insulation and protective function of the protection board 2. In an example, the width a of the first gap 44 may be 0.5 mm, 0.8 mm, 1 mm, 1.2 mm, 1.5 mm, 1.8 mm, or the like.

In addition, it can be understood that when the first gap 44 extends through the first covering portion 41, the second covering portion 42, and the third covering portion 43, the portions of the first insulation layer 4 on two sides of the first gap 44 along the width direction of the battery cell form two independent parts. One part corresponds to the first step surface 31 of the potting member 3, and the other corresponds to the second step surface 32 of the potting member 3. Since the height of the first step surface 31 of the potting member 3 along the height direction of the battery cell is lower than the height of the second step surface 32, the length of the first insulation layer 4 corresponding to the first step surface 31 can be smaller than the length of the first insulation layer 4 corresponding to the second step surface 32. That is, a length difference (e.g., b in FIG. 13) exists between the portion of the first insulation layer 4 corresponding to the second step surface 32 and the portion of the first insulation layer 4 corresponding to the first step surface 31, so that after the first insulation layer 4 wraps around the potting member 3, the edges of the portion of the first insulation layer 4 corresponding to the first step surface 31 can be as flush as possible with the edges of the portion of the first insulation layer 4 corresponding to the second step surface 32.

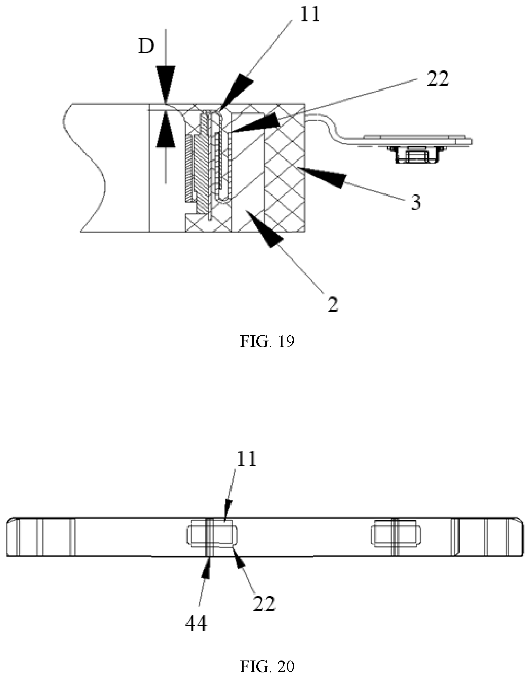

In addition, referring to FIG. 19, in some embodiments, the battery cell is provided with a tab 11, and the protection board body includes a conductive sheet 22 for connection to the tab 11. The tab 11 and the conductive sheet 22 are both enclosed inside the potting member 3. That is, the potting member 3 may cause at least a portion of the side surface of the protection board body on the same side as the shallow recessed surface 13 to be exposed. However, the tab 11 of the battery cell and the conductive sheet 22 of the protection board 2 remain unexposed; that is, the tab 11 and conductive sheet 22 are fully enclosed inside the potting member 3 rather than exposed outside the potting member 3. Since the tab 11 and the conductive sheet 22 are metallic and prone to electrical conduction, which could cause short circuits, in this embodiment, the tab 11 and conductive sheet 22 are enclosed inside the potting member 3, thereby providing insulation and protection for the tab 11 and the conductive sheet 22.

Further, in some embodiments, the tab 11 includes a third straight portion and a third bent portion, where the third straight portion is connected to the top sealing edge of the battery cell by the third bent portion, the third straight portion is connected to the conductive sheet 22, the third bent portion is positioned away from the exposed side of the protection board body, and along the thickness direction of the battery cell, a distance from an outer side surface of the third bent portion to an outer surface of the potting member 3 is greater than 0.4 mm.

The third bent portion is located on the side away from the exposed side of the protection board body. That is, along the thickness direction of the battery cell, the outer side surface of the third bent portion of the tab 11 (i.e., the side of the third bent portion of the tab 11 away from the its bending direction) is closest to the outer surface of the potting member 3. The minimum distance from the outer side surface of the third bent portion of the tab 11 to the outer surface of the potting member 3 along the thickness direction of the battery cell is denoted as C, which corresponds to the dimension of the potting member 3 along the thickness direction of the battery cell and outside the non-exposed side of the protection board body, where C ≥ 0.4 mm.

In addition, to facilitate heat dissipation from the tab 11 of the battery cell and the conductive sheet 22 of the protection board 2, as shown in FIG. 20, in some embodiments, projections of the first gap 44, the tab 11, and the conductive sheet 22 of the protection board 2 overlap along the thickness direction of the battery cell 1. Alternatively, the first insulation layer 4 is provided with a second gap at positions corresponding to the tab 11, the conductive sheet 22, and/or a preset device of the protection board 2, and the tab 11, the conductive sheet 22, and the preset device are all located in the potting member 3.

That is, in this embodiment, the tab 11 and the conductive sheet 22 are arranged at the first gap 44. Alternatively, a second gap is formed in the first insulation layer 4 at positions corresponding to the tab 11 and the conductive sheet 22, so that the regions of the protection board 2 with the highest temperature are arranged at the first gap 44 or the second gap. This arrangement facilitates heat dissipation and effectively addresses the problem of heat dissipation at the head of a high-power battery.

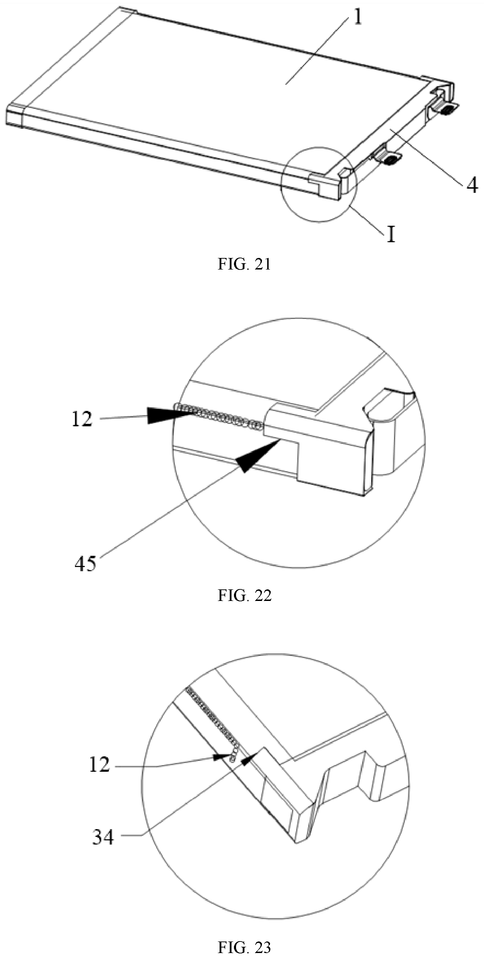

In addition, referring to FIGS. 13 and 21 to 23, in some embodiments, the battery further includes a second insulation layer 45 covering an end portion of the side sealing edge 12 along the height direction of the battery cell and an overflow portion 34 of the potting member 3 corresponding to the side sealing edge 12.

It can be understood that the potting on the side sealing edge 12 at the head of the battery cell 1 is prone to detachment at high temperatures, which may compromise insulation. To avoid the detachment of the potting on the side sealing edge 12 at the head of the battery cell 1, in this embodiment, the second insulation layer 45 is disposed to cover the end portion of the side sealing edge 12 of the battery cell 1. This arrangement can prevent the potting at the end portion of the side sealing edge 12 along the height direction from detaching at high temperatures, thereby ensuring that the side sealing edge 12 of the battery cell 1 remains properly insulated. In addition, overflow portions 34 are disposed on two sides of the potting member 3 along the width direction of the battery cell. The overflow portions 34 result from a potting material spilling into spacings at rounded corners on two sides of the battery cell along the width direction during the potting process of the battery, which is an inevitable feature. In this embodiment, by causing the second insulation layer 45 to cover the overflow portions 34, the second insulation layer 45 conceals the overflow portions 34, thereby helping to enhance the overall appearance.

It is to be noted that, the specific dimensions of the second insulation layer 45 are not limited in this embodiment, provided that the second insulation layer 45 can cover the end portion of the side sealing edge 12 along the height direction of the battery cell and the overflow portion 34 of the potting member 3 corresponding to the side sealing edge 12.

In an example, the second insulation layer 45 has a rectangular shape, and the length dimension d of the second insulation layer 45 along the height direction of the battery cell ranges from 1 to 4 mm. The width dimension e of the second insulation layer 45 ranges from 2 to 5 mm.

Further, considering the simplicity of the overall structure and ease of operation, as shown in FIG. 13, in some embodiments, the first insulation layer 4 and the second insulation layer 45 are formed as an integral structure. That is, the first insulation layer 4 and the second insulation layer 45 are integrated into a single unit, facilitating assembly.

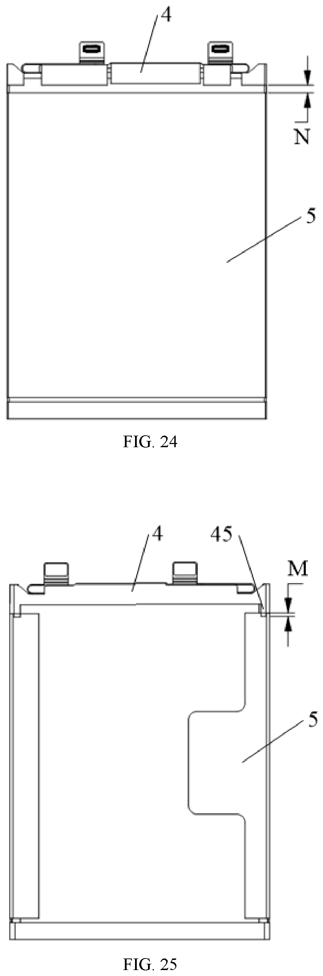

Further, referring to FIGS. 24 to 26, in some embodiments, the battery further includes a tear-off label 5 disposed on an outer surface of the battery, where along the height direction of the battery, a spacing is formed between the tear-off label 5 and an edge of the first insulation layer 4, and the tear-off label 5 covers at least a portion of the second insulation layer 45.

That is, in this embodiment, the tear-off label 5 is disposed on the battery corresponding to the exposed side of the protection board 2. Along the height direction of the battery, a distance N is formed between the top end of the tear-off label 5 and the end surface of the first insulation layer 4. N needs to be greater than 0 to prevent overlap between the first insulation layer 4 and the tear-off label 5, which could otherwise result in an excessively thick battery. Moreover, the tear-off label 5 needs to wrap around at least the end portion of the second insulation layer 45. That is, along the height direction of the battery, the tear-off label 5 overlaps with the second insulation layer 45 over a length M, as shown in FIG. 25, so that the tear-off label 5 presses down on side edges of the second insulation layer 45 along the width direction of the battery cell 1, thereby preventing the second insulation layer 45 from lifting or peeling.

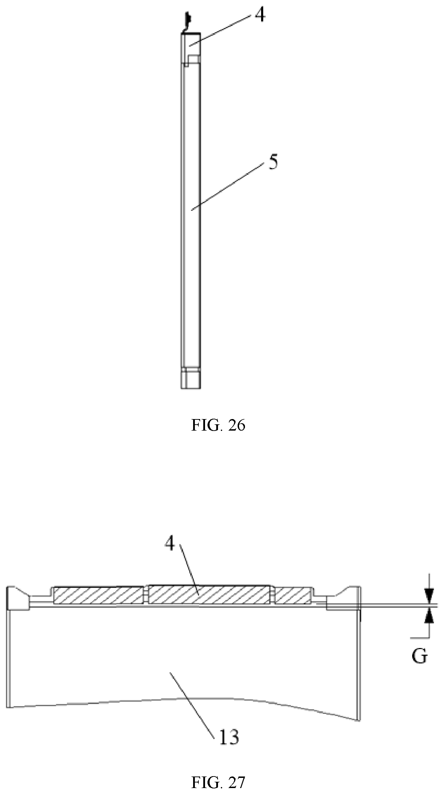

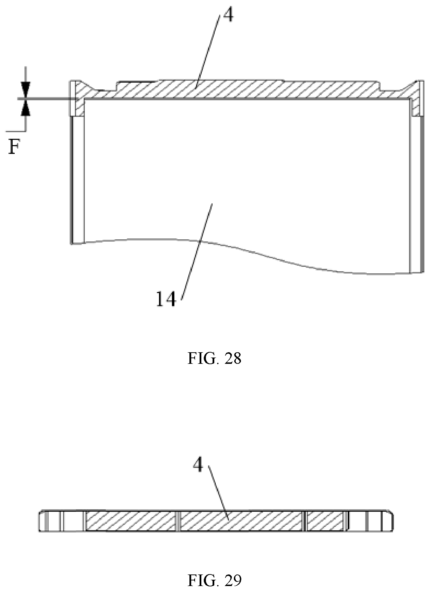

In addition, to avoid increasing the thickness of the battery, referring to FIGS. 27 to 29, in some embodiments, along the height direction of the battery, a spacing is formed between the edge of the first insulation layer 4 and the top end of the battery cell 1.

That is, along the height direction of the battery, the distance F between the edge of the first insulation layer 4 corresponding to the deep recessed surface 14 of the battery and the top end surface of the battery cell needs to be greater than 0. Along the height direction of the battery, the distance G between the edge of the first insulation layer 4 corresponding to the shallow recessed surface 13 and the top end surface of the battery cell needs to be greater than 0, to prevent the first insulation layer 4 from overlapping the battery cell and avoid increasing the thickness of the battery.

In an example, the values of F and G are each in the range of 0.3 to 1 mm.

In addition, it is to be noted that the specific method of connecting the protection board 2 to the battery cell 1 is not limited in the above embodiments. In an example, as shown in FIG. 1, the protection board 2 can be connected to the battery cell 1 by a double-sided adhesive tape 6, and an adhesive 7 may be applied between the top sealing edge and the top end surface to fix the first straight portion. In addition, a tail insulation layer 8 may be disposed at the bottom end of the battery cell 1 along the height direction, and the tail insulation layer 8 may be formed of an insulating adhesive tape.

It is also to be noted that in the description, relationship terms such as "first" and "second" are merely used to distinguish an entity or operation from another entity or operation, and do not necessarily require or imply that any such actual relationship or order exists between those entities or operations.

All embodiments in the description are described in a progressive manner. Each embodiment focuses on differences from other embodiments. For the same or similar parts between various embodiments, reference may be made to each other.

The battery according to the present invention has been described in detail above. In this description, specific examples have been used to illustrate the principles and implementations of the present invention. The illustrations of the above embodiments are provided merely to facilitate an understanding of the method and core concept of the present invention. It is to be noted that, for a person of ordinary skill in the art, various modifications and variations of the present invention can be made without departing from the principle of the present invention, and such modifications and variations also fall within the scope of protection of the present invention.

## Claims

1. A battery, comprising:
a battery cell (1) comprising an electrode assembly and a film casing, the battery cell (1) comprising a top end surface at one end of the battery cell (1) along a height direction and side end surfaces at two ends of the battery cell (1) along a width direction, wherein the film casing is provided with a first groove and a second groove, the first groove and the second groove enclosing a space for accommodating the electrode assembly, a depth of the first groove along a thickness direction of the battery cell (1) being greater than a depth of the second groove along the thickness direction, an outer wall surface of the first groove perpendicular to the thickness direction being a deep recessed surface (14), an outer wall surface of the second groove perpendicular to the thickness direction being a shallow recessed surface (13); the film casing is provided with a top sealing edge along the height direction, the top sealing edge comprising a first straight portion and a first bent portion, the first straight portion being connected to the top end surface by the first bent portion, and the first bent portion being bent toward a side where the deep recessed surface (14) is located; and the film casing is provided with side sealing edges (12) on two sides along the width direction, each side sealing edge (12) comprising a second straight portion and a second bent portion, the second straight portion being connected to the side end surface by the second bent portion, and the second straight portion being attached to the side end surface;
a protection board (2) connected to a top end of the battery cell (1) along the height direction, the protection board (2) comprising a protection board body and a connecting terminal; and
a potting member (3) covering an outer peripheral portion of the protection board (2) and exposing at least a portion of a side surface of the protection board body on the same side as the shallow recessed surface (13),
wherein a dimension of the battery cell (1) along the thickness direction is defined as A, and a dimension of the protection board body along the thickness direction is defined as B; and along the thickness direction, a minimum dimension of the potting member (3) from the side surface of the protection board body to a surface of the potting member (3) on a non-exposed side is defined as C, and a dimension of the potting member (3) along the thickness direction is defined as D,
wherein C ≥ 0.4 mm, 0.4 mm < A - B < 0.8 mm, and D ≤ A.

2. The battery of claim 1, further comprising:
a first insulation layer (4) covering at least a portion of the exposed portion of the protection board body.

3. The battery of claim 2, wherein the first insulation layer (4) comprises:
a first covering portion (41) covering at least the portion of the protection board body exposed outside the potting member (3);
a second covering portion (42) covering a side of the potting member (3) away from the exposed side of the protection board body; and
a third covering portion (43) connected between the first covering portion (41) and the second covering portion (42) and attached to a top end of the potting member (3) along the height direction.

4. The battery of claim 3, wherein a stepped structure is provided at a top of the potting member (3) along the height direction, the stepped structure comprising a first step surface (31), a second step surface (32), and a connecting surface (33) connecting the first step surface (31) and the second step surface (32), and the first step surface (31) and the second step surface (32) being distributed along the width direction,
wherein the first insulation layer (4) is provided with a first gap (44) at a position corresponding to the connecting surface (33), the first gap (44) extending at least from a junction between the second covering portion (42) and the third covering portion (43) toward the first covering portion (41) to an edge of the first insulation layer (4).

5. The battery of claim 4, wherein the first gap (44) has a dimension ranging from 0.4 to 2 mm along the width direction.

6. The battery of claim 4, wherein along the height direction, a height of the second step surface (32) relative to the top end surface of the battery cell is E, and a height of the first step surface (31) relative to the top end surface of the battery cell is H, wherein E > H; and the protection board (2) comprises a flexible circuit board (21) disposed on the first step surface (31), a thickness of the flexible circuit board (21) along the height direction being K, wherein E-H>K.

7. The battery of claim 4, wherein along the thickness direction, projections of the first gap (44), a tab (11) of the battery cell, and a conductive sheet (22) of the protection board (2) overlap; or
the first insulation layer (4) is provided with a second gap at positions corresponding to the tab (11), the conductive sheet (22), and/or a preset device of the protection board (2), and the tab (11), the conductive sheet (22), and the preset device are all located inside the potting member (3).

8. The battery of any one of claims 1 to 7, wherein the battery cell is provided with a tab (11), and the protection board body comprises a conductive sheet (22) for connection to the tab (11);
the tab (11) and the conductive sheet (22) are both enclosed inside the potting member (3); and/or
the tab (11) comprises a third straight portion and a third bent portion, the third straight portion being connected to the top sealing edge of the battery cell by the third bent portion, the third straight portion being connected to the conductive sheet (22), the third bent portion being positioned away from the exposed side of the protection board body, and along the thickness direction, a distance from an outer side surface of the third bent portion to an outer surface of the potting member (3) being greater than 0.4 mm.

9. The battery of any one of claims 2 to 7, further comprising a second insulation layer (45) covering an end portion of the side sealing edge (12) along the height direction and an overflow portion (34) of the potting member (3) corresponding to the side sealing edge (12),
wherein the second insulation layer (45) and the first insulation layer (4) are preferably formed as an integral structure.

10. The battery of claim 9, further comprising:
a tear-off label (5) disposed on an outer surface of the battery, wherein along the height direction, a spacing is formed between the tear-off label (5) and an edge of the first insulation layer (4), and the tear-off label (5) covers at least a portion of the second insulation layer (45); and/or
along the height direction, a spacing is formed between the edge of the first insulation layer (4) and a top end surface of the battery cell (1).
